# EUROPEAN PATENT SPECIFICATION

(11) **EP 3 470 596 B1**
(45) Date of publication and mention of the grant of the patent: **12.07.2023**
(21) Application number: 18198513.6
(22) Date of filing: 03.10.2018
(51) Int. Cl.: E04D 3/06, E04C 2/54, B32B 3/12, E04D 3/28

(54) **REINFORCED PANEL FOR FORMING A ROOF COVERING**
VERSTÄRKTE PLATTE ZUR BILDUNG EINER DACHABDECKUNG
PANNEAU RENFORCÉ POUR LA FORMATION D'UNE COUVERTURE DE TOIT

(30) Priority: 03.10.2017 IT 201700110729; 19.09.2018 IT 201800008718
(43) Date of publication of application: 17.04.2019
(73) Proprietor: DOTT. GALLINA S.r.l., 10129 Torino (IT)
(72) Inventor: GALLINA, Daniel, 10129 TORINO (IT)
(74) Representative: Lovino, Paolo

(56) References cited:
- EP-A- 0 657 280
- FR-A- 1 246 493
- US-A- 4 759 964
- US-B1- 6 511 730

## Description

### TECHNICAL FIELD

The present invention relates to a reinforced panel for forming a roof covering.

### BACKGROUND ART

As already known, for forming coverings in general, namely roofs, canopies, verandas and skylights in particular, it is known the use of plastic covering panels.

To date, different types of covering panels are used and, in particular, single or double-wall panels. Generally, the walls comprise plates made of inorganic plastic material, e.g. compact or honeycomb-shaped polycarbonate.

When the panel must have fire resistant properties, namely when in the presence of flames the detachment and fall of drops of incandescent plastic material must be prevented, it is known to use a double-wall panel and to arrange between the walls a continuous layer of compressed glass wool with a thickness varying between 20 and 200 mm and a weight varying between 100 and 500 g/m2.

The known panels of the aforesaid type, even if used, are not very satisfactory in terms of optical properties, size and production costs. Moreover, the panels are bulky due to their thickness and heavy but, above all, due to the fact that they are optically almost opaque, have very low light transmission values, in the order of a few percentage points. These characteristics greatly limit the field of application of known panels.

Fire resistant panels are disclosed, for example, in US 6 511 730 B1 and US 4 759 964 A

### DISCLOSURE OF INVENTION

The object of the present invention is to provide a reinforced panel for forming a roof covering, which allows solving the aforesaid problems in a simple and inexpensive manner, and in particular a reinforced panel having high transparency and at the same time low overall dimensions and costs.

According to the present invention, a reinforced panel for forming a roof covering is provided as claimed in claim 1. Preferably, in the aforesaid panel the resin is interposed between said lower surface and said sheet of inorganic material or is in contact with said lower surface. Conveniently, the sheet of inorganic material comprises interwoven glass fibres.

Preferably, the panel further comprises a second sheet of light-permeable plastic material facing said sheet of inorganic material, and fastening means for stably locking said first and second sheets of plastic material to one another; wherein said sheet of light-permeable inorganic material and said resin are squeezed between said first and second sheets of plastic material, or partially occupy a chamber delimited by the same sheets of plastic material.

### BRIEF DESCRIPTION OF THE DRAWINGS

The invention will now be described with reference to the attached figures showing an example of a non-limiting embodiment, in which:
Figure 1 shows, schematically and substantially in blocks, a roof covering provided with a first preferred embodiment of a reinforced panel made according to the dictates of the present invention;
Figure 2 is a section, on a greatly enlarged scale, along the line II-II of Figure 1;
Figure 3 is similar to Figure 2 and shows, in section and on a greatly enlarged scale, a second preferred embodiment of the reinforced panel according to the present invention;
Figure 4 is similar to Figure 3 and shows a variant of a detail of Figure 3; and
Figure 5 shows graphs showing the variation of the transmission spectrum between 170 - 2500 nm based on the wavelength for a traditional panel and for reinforced covering panels made according to the dictates of the present invention.

### BEST MODE FOR CARRYING OUT THE INVENTION

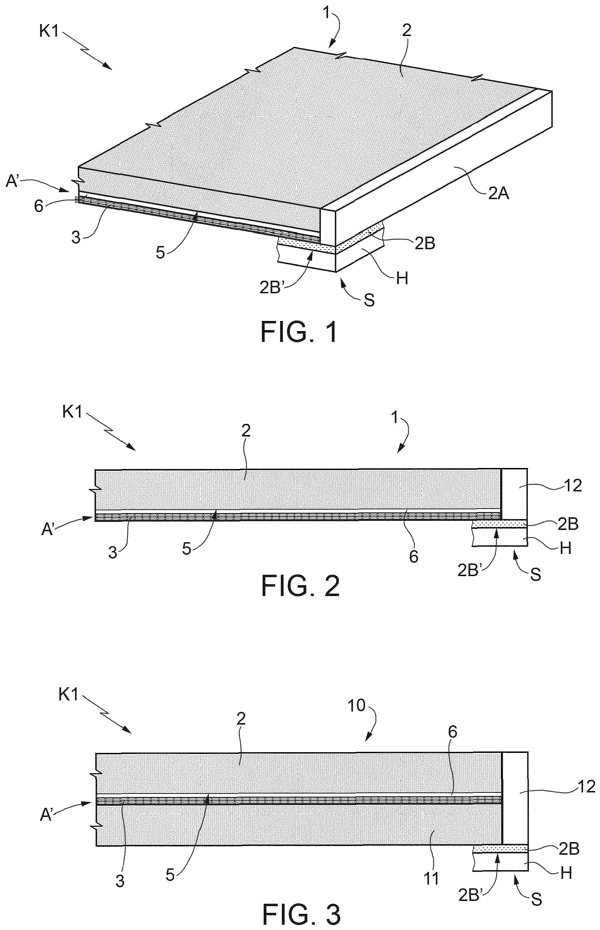

In Figures 1 and 2, K1 indicates as a whole a modular roof covering, and, in particular, a modular roof comprising a support frame S, e.g. a metal structure, known per se and in turn comprising a plurality or mesh of supporting beams H, only one of which is visible in Figures 1 and 2. The roof K1 comprises a plurality of reinforced and modular covering panels 1 resting on the structure S1, arranged side by side and watertight connected to each other.

Each panel 1 comprises a honeycomb-shaped plate 2 of light-permeable plastic material, e.g. a polycarbonate, a Pmma or another transparent or semi-transparent polymeric material. Conveniently, the plate 2 is of the type identified with the trade name ARCOPLUS 626 or a plate identified as opal polyvalent 900. Here and in the following, the term "honeycomb-shaped" means a plate having at least two smooth or ribbed extended side walls and a plurality of communicating or non-communicating internal chambers and/or channels formed between the side walls.

Still with reference to Figures 1 and 2, the panel 1 further comprises a reinforcing composite layer A' to increase the fire resistance of the plate 2. The reinforcing layer A' is a composite layer without interruption.

Specifically, the layer A' comprises a reinforcing sheet 3 of the plate 2. The sheet 3 is an inorganic sheet, flexible and continuous, i.e. free of through openings, and is light-permeable. Conveniently, the sheet 3 is filled with glass and more precisely comprises long intertwined and non-woven glass fibres. Preferably, the fibres are intertwined to form a non-woven fibrous structure. Alternatively, the fibres form a regular mesh structure with warp and weft, having a mesh of such width as not to affect light transmission through the layer A'. Preferably, the sheet 3 is a sheet of material commercially known as "glass sheet" having a weight ranging between 10 and 100 gr/sqm. Preferably, a weight of 30 gr/sqm.

Alternatively, the sheet 3 has a reticular structure and, in particular, comprises a net, preferably made of plastic or synthetic material analogous to the so-called plaster-carrying nets used in the building field and having meshes varying between 2 and 10 mm.

The sheet 3 faces a lower surface 5 or turned in use towards the bottom of the plate 2. The layer A' further comprises a continuous layer 6 of polymeric material, conveniently a retardant expanding resin evenly spread on the lower surface 5 and cooperating with the sheet 3. The layer A' is a continuous or homogeneous layer without interruption and can be obtained by impregnating the sheet 3 with the retardant resin that, in this case, also acts as an adhesive with regard to the plate 2.

Alternatively, the layer A' is obtained by lamination of a fibre-reinforced or "pre-impregnated" composite material known as "pre-preg". The layer A' thus formed is then laid on the surface 5 and stably connected to the surface 5 by means of a chemical process, e.g. by gluing, and/or of a physical process, e.g. by softening.

Regardless of the way of forming the layer A' and of its connection to the plate 2, the retardant resin consists of a mixture of products or additives, e.g. metal hydroxides, halogenated compounds, brominated organic compounds, phosphorus-based compounds or heteroatoms, organophosphates, UV crosslinkable systems or with crosslinkable systems for IR heating and having flame retardation as an intrinsic characteristic.

Alternatively, the retardant resin layer is replaced by an intumescent resin layer or by a layer having intumescent properties.

A formulation with intumescent properties contains four basic ingredients and, in particular:
- a basic polymer resin (binder) forming the binder. The polymer resin can be selected among chlorinated natural rubber, urea-formaldehyde resins, epoxy resins, polyvinyl acetate, polyvinylidene chloride and polyvinyl chloride, glass fibre reinforced epoxy resins. The basic function of the binder is combining the intumescent ingredients and providing adhesion to the substrate, so that they are kept in intimate contact. The binder contributes to the formation of a foamy structure (even cellular structure) since the combustion-softened binder constitutes a melted viscous mass able to incorporate and trap the gases emitted by the expanding decomposing agents, thus ensuring a controlled expansion of the insulating carbon layer. It is essential that the ingredients in the intumescent mixture maintain their chemical functionality over a long time. The function of the polymeric binder is also protecting the intumescent ingredients, which are often sensitive to water, providing the necessary resistance to water, UV rays, abrasion, etc.;
- a fire retardant material selected from a mineral acid catalyst acting as a source of inorganic acid (an inorganic material producing a mineral acid during combustion) such as sulfuric acid or phosphoric acid at a temperature comprised between 200°C and 250°C. An example for intumescent applications is ammonium polyphosphate;
- a carbon source. The carbon source material is an organic compound containing hydroxyl groups, which react with the acid during combustion. These are systems with a high proportion of carbon atoms in the molecule. This characteristic determines the formation of high quantities of carbon "char" during degradation. Examples of such selectable materials are starches, polyvalent alcohols such as erythritol, pentaerythritol, di- and tri-pentaerythritol and sugars such as glucose and maltose. The preferable material is dipentaerythritol;
- an expanding agent. The expanding agent has the function of thermally decomposing during combustion by releasing non-flammable gases. The release of gaseous phases in the combustion mass must take place exactly in the temperature range in which the coating started to soften and carbonize to form a massive carbonizing foam. The expanding agent is selectable among 2-amino-triazine salts, melamine monooxalate and dimelamine oxalate, salts such as acetoguanamine oxalate, propioguanamine oxalate, melamine succinate and melamine maleate.

The resin could still comprise a foam-producing agent, usually based on nitrogen; examples are melamine (poly)phosphate or ammonium polyphosphate. Using resins with intumescent properties, the thermal barrier effect is therefore due to the expansion and carbonization of the layer A' in the fire-involved area.

When the sheet 3 is formed by a net of the aforesaid type, the resin cross-linking or expansion during combustion causes a swelling and a substantial closure of the openings of the net. Conveniently, the used intumescent resins include ammonium polyphosphate, pentaerythritol and melamine with high expanding power and fire-retardant properties. By way of example, intumescent resins may be of the type commercially identified with CHAR 17, CHAR 21a CHAR 22 of the company Iris Coating.

The panel 1 is formed by spreading the resin on the surface 5 of the plate 2 so as to form a continuous layer 6 with a thickness ranging from 0.1 to 5 mm, conveniently 1 mm. On the layer 6, the reinforcing sheet 3 and the same pressed sheet 3 are laid so that the resin layer 6 at least partially incorporates the layer 3. At this point, the resin is consolidated in a manner known per se until it is brought into a perfect cross-linking condition.

In this condition, the resin layer 6 defines, either alone or together with the sheet 3 based on the thickness of the used material, a real thermal barrier or firebreak, which in case of an even partial melting of the plate 2, if invested by a concentrated heat source, holds the drops of molten plastic material, thus preventing their fall. Conveniently, the panel 1 further comprises a side buffer portion indicated with 2A. According to a variant not shown, the panel 1 lacks the side buffer portion 2A.

In both solutions, the panel 1 comprises a peripheral portion 2B of thermally insulating material interposed between the reinforcing composite layer A' and each of the supporting beams H. Conveniently, each portion 2B is a strap made of intumescent material, for example of the type marketed by the MARVON company. Preferably, each or at least part of the straps 2B carries an adhesive material layer arranged on a surface 2B' of the strap 2B facing the supporting beam H and forming part of the panel 1 together with the strap 2B (Figures 1 and 2).

The embodiment shown in Figure 3 relates to a reinforced panel 10, which differs from the reinforced panel 1 for some constructive details, and whose components are marked with the same reference numbers as the corresponding parts of the panel 1.

The panel 10 comprises a second honeycomb-shaped plate 11 of light-permeable plastic material, identical to the plate 2 or different from the plate 2 due to its material or structure and/or light permeability. The plate 11 is in contact with the layer A' and is stably connected to the plate 2 e.g. by means of head junctions 12, known per se and not described in detail, conveniently made of a metal material.

The panel 10 is therefore a laminated panel, in which the layer A' is closely interposed between the two plates 2 and 11.

Just like the panel 1, the panel 10 also rests on the supporting beams H, thus laying the plate 11 on the beams H and interposing between each beam H and the plate 11 a respective strap 2B of intumescent material, which is also glued to the relative beam H by means of the adhesive material layer. Also in this solution, the straps 2B and the relative adhesive material layers are part of the panel 10.

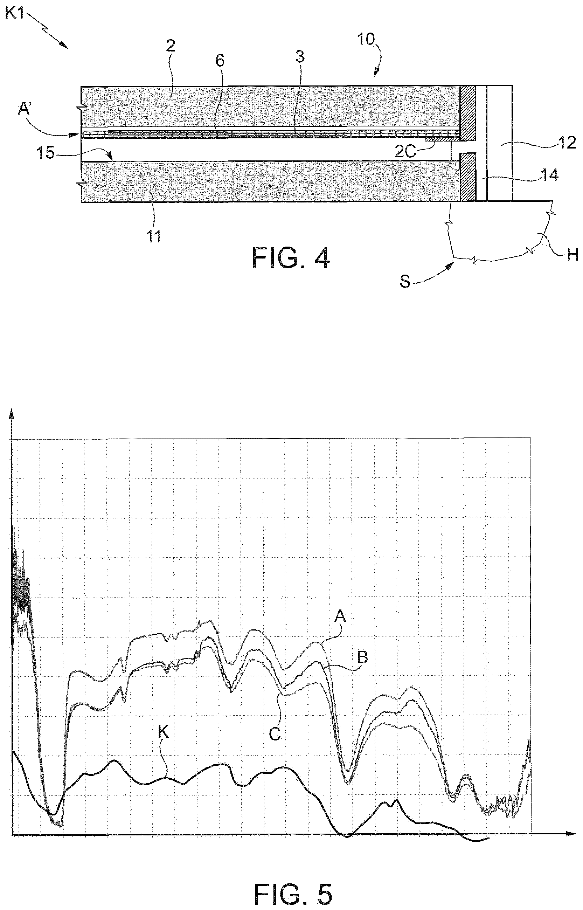

In the variant shown in Figure 4, spacers 14, which are schematically shown and conveniently made of metal material, are interposed between the two plates 2 and 11. In this way, the plates 2 and 11 form between them a chamber 15, which is only partially filled by the layer A'. The remaining part of the chamber 15 is empty.

Still with reference to Figure 4, between each reinforcing composite layer A and each spacer 14 an interposed strap 2C of intumescent material is glued to the spacer 14 and is structurally identical to the strap 2B.

Also in the panel 10, in case of a partial melting of the plate 2, the drops of the plate 2 do not penetrate into the chamber 15, which keeps performing its traditional function.

According to a further variant not shown, the layer A' is not in contact with the surface 5 of the plate 2 but is in contact with the upper surface of the plate 11 facing the plate 2. In case of a partial melting of the plate 2, the drops of the plate 2 penetrate into the chamber 15, but remain in this chamber without affecting the plate 11 as they are hold by the layer A'. In this solution, the strap 2C is interposed between the layer A' and the spacer 14.

In the event of fire, both the panel 1 and the panel 10 described above pass the B-roof test known as Test 1 FULL TEST: UNE-CEN/TS 1187:2013 "Test methods for external fire exposure to roofs" and therefore allow forming modular coverings that are not only light-permeable but also extremely safe, as they prevent the molten plastic material of the plate 2 from leaking or dripping and hitting underlying persons or objects in the event of fire.

Figure 5 shows various curves, which have been experimentally obtained and which show the transmittance or transmission spectrum trends between 170 and 2500 nanometres, i.e. the light permeability based on the wavelength for panels having different characteristics. In particular, the curve K relates to a traditional reinforced panel, while the curve A relates to a panel formed only by the plate 2, namely to a panel without the layer A. The curves B and C are instead related to the panel 1 according to the invention with retardant resin and, respectively, with intumescent resin.

A comparison between the curves K and A first of all confirms the strong light impermeability of traditional reinforced panels compared to a common non-reinforced transparent panel.

Moreover, the same comparison of the curves clearly shows that the reinforced panels 1, 10 made according to the invention have a light permeability and therefore a transparency comparable with the one of a traditional non-reinforced panel. The curves B and C are in fact close to the curve A and just below the curve A, but quite far away from the curve K.

The foregoing clearly shows that the presence of the fire resistant layer A' allows, on the one hand, obtaining panels whose light permeability is comparable with the one of traditional plates of non-reinforced plastic material and, on the other hand, whose capability of holding the plastic material drops when melted is comparable to the one of traditional reinforced panels, thus complying with the current legislation EN 13501-5 - Outdoor fire roofs, CEN_TS 1187 - Outdoor roofs fire resistance method.

Regardless of the manufacturing mode of the panels 1, 10, the peripheral straps 2B, 2C allow further improving the fire resistance of the panel 1, 10 and, in general, of the modular covering or roof K1, since the straps 2B, 2C act as true insulating barriers that thermally insulate the layer A' from its metal support frame, if the panel rests on the same support frame K1, or the layer A' or the plate 2, 11 from the metal spacers provided in the solutions with several plates 2, 11 of light-permeable plastic material like the solution shown in Figure 4.

Besides the aforesaid, the presence of the layer A' and of the intumescent straps 2B allows overcoming with a wide margin the aforementioned certification "Broof (t1) UNE-CEN/TS 1187: 2013" when the panels 1, 10 are superimposed on the structure metal S and are juxtaposed and joined together to form the modular roof or covering K1.

From the foregoing, it is clear that modifications and variations can be made to the described reinforced panels 2 and 10. In particular, in the panel 10, both plates 2 and 11 can be reinforced with respective fire resistant layers A'. In this case, the layers A' can comprise the same resin or different resins, just as the same layers can be formed with equal or different reinforcing sheets.

## Claims

1. A reinforced panel (1;10) for forming a roof covering comprising at least a first honeycomb-shaped plate (2) of light-permeable plastic material and reinforcement means of said first honeycomb-shaped plate (2) facing a lower surface (5) of said plate (2), wherein said reinforcement means comprise a light-permeable homogeneous layer (A'); wherein said light-permeable homogeneous layer (A') comprises a sheet of light-permeable inorganic material (3) and a continuous layer of retardant or intumescent expanding resin (6); when the honeycomb-shaped plate (2) of plastic material reaches, even if only locally, its softening or melting point due to combustion, said homogenous layer (A') defines a barrier for holding the melted parts of said honeycomb-shaped plate (2) of plastic material;
**characterized in that** at least a strap of intumescent material (2B;2C) is arranged at a peripheral portion of said reinforced panel and on a surface of said reinforced panel which is opposite to a surface of said homogeneous layer (A') facing the lower surface (5) of said first honeycomb-shaped plate (2).

2. The panel according to claim 1, **characterised in that** said resin (6) is interposed between said lower surface (5) and said sheet of inorganic material (3) and at least partially incorporates said sheet of inorganic material (3).

3. The panel according to claim 1, **characterised in that** said resin (6) is in contact with said lower surface (5) .

4. The panel according to claim 1, **characterised in that** said sheet of inorganic material (3) comprises intertwined glass fibres.

5. The panel according to claim 1, **characterised by** further comprising a second honeycomb-shaped plate of light-permeable plastic material (11) facing said sheet of inorganic material (3), and fastening means for firmly locking said first and second plates of plastic material (2,11) to one another; said sheet of light-permeable inorganic material (3) and said resin (6) being both squeezed between said first and second plates of plastic material (2,11).

6. The panel according to claim 1, **characterised by** further comprising a second honeycomb-shaped plate of light-permeable plastic material (11) facing said homogenous layer (A'), fastening means for firmly locking said first and second plates of plastic material (2,11) to one another and spacers (14) for mutually spacing said first and second plates of plastic material (2,11); wherein said first and second plates of plastic material (2,11) delimit a compartment (15) between them; and wherein said homogenous layer (A') only partially occupies said compartment (15).

7. The panel according to any one of the preceding claims, **characterised in that** said strap of intumescent material (2B;2C) is arranged between said peripheral portion of said homogeneous layer (A') and, in use, a metal structural element (H) defining a support frame (S) of said panel (1;10) or between said peripheral portion of said homogeneous layer (A') and a spacer (14) or a structural element of said panel (1;10).

8. The panel according to claim 1, **characterised in that** said strap of intumescent material (2B;2C) is directly in contact with said peripheral portion of said homogeneous layer (A').

9. The panel according to claim 1, **characterised by** comprising an adhesive material spread on a surface of said strap (2B;2C) opposite the one facing said homogenous layer (A').

10. The panel according to any one of the preceding claims, **characterised in that** said sheet of inorganic material (3) has a weight ranging between 10 and 100 gr/sqm.

11. The panel according to any one of the preceding claims, **characterised in that** said resin (6) comprises a polymeric binding agent, an inorganic or mineral acid catalyst, a carbon-source material and an expanding agent that thermally decomposes during combustion by releasing non-flammable gases.

12. A process for forming a reinforced roof covering panel (1;10) as defined in claim 1; wherein the process comprises the steps of using at least a first honeycomb-shaped plate of light-permeable plastic material (2), continuously spreading a layer of intumescent or retardant resin (6) on a lower surface (5) of said honeycomb-shaped plate of plastic material (2), continuously laying a sheet of light-permeable inorganic material (3) on said layer of intumescent or retardant resin (6) and firmly connecting said sheet of inorganic material (3) by consolidating or cross-linking said intumescent or retardant resin (6), thus forming a homogenous layer (A') that defines a barrier for holding the melted parts of said plate (2) in the event of fire;
**characterized in that** at least a strap of intumescent material (2B;2C) is arranged at a peripheral portion of said reinforced panel and on a surface of said reinforced panel which is opposite to a surface of said homogeneous layer (A') facing the lower surface (5) of said first honeycomb-shaped plate (2).

13. The process according to claim 12, **characterised by** using a second plate of light-permeable plastic material (11), arranging the second plate of plastic material (11) in contact with said homogenous layer (A') and firmly locking the plates of plastic material (2,11) to one another.

14. The process according to claim 13, **characterised in that** said second plate of plastic material (11) is arranged in a position spaced from said first plate (2), thus forming between the plates of plastic material a compartment (15) that is only partially filled by said homogenous layer (A'), and **in that** said plates of plastic material (2,11) are locked in said spaced position.

15. A roof covering comprising a support frame (S) and one or more juxtaposed reinforced panels (1;10) arranged on said support frame (S), said reinforced panel (1;10) being implemented as claimed in claim 1.

16. The roof covering according to claim 15, **characterised in that** each of said reinforced panels (1;10) is a modular panel.

## Patentansprüche

1. Verstärkte Platte (1; 10) zum Bilden einer Dachabdeckung, die wenigstens eine erste wabenförmige Platte (2) aus lichtdurchlässigem Kunststoffmaterial und Verstärkungsmittel der ersten wabenförmigen Platte (2), die einer Unterseite (5) der Platte (2) zugewandt sind, umfasst, wobei die Verstärkungsmittel eine lichtdurchlässige homogene Lage (A') umfassen; wobei die lichtdurchlässige homogene Lage (A') eine Schicht aus lichtdurchlässigem anorganischem Material (3) und eine durchgehende Lage eines flammhemmenden oder intumeszierenden expandierenden Harzes (6) umfasst; wobei, wenn die wabenförmige Platte (2) aus Kunststoffmaterial, wenn auch nur lokal, ihren Erweichungs- oder Schmelzpunkt aufgrund von Verbrennung erreicht, die homogene Lage (A') eine Barriere zum Halten der geschmolzenen Teile der wabenförmigen Platte (2) aus Kunststoffmaterial definiert;
**dadurch gekennzeichnet, dass** wenigstens ein Streifen aus intumeszierendem Material (2B; 2C) an einem Umfangsabschnitt der verstärkten Platte und auf einer Oberfläche der verstärkten Platte, die gegenüber einer Oberfläche der homogenen Lage (A') liegt, die der Unterseite (5) der ersten wabenförmigen Platte (2) zugewandt ist, angeordnet ist.

2. Platte nach Anspruch 1, **dadurch gekennzeichnet, dass** das Harz (6) zwischen der Unterseite (5) und der Schicht aus anorganischem Material (3) eingefügt ist und wenigstens teilweise die Schicht aus anorganischem Material (3) enthält.

3. Platte nach Anspruch 1, **dadurch gekennzeichnet, dass** das Harz (6) mit der Unterseite (5) in Kontakt ist.

4. Platte nach Anspruch 1, **dadurch gekennzeichnet, dass** die Schicht aus anorganischem Material (3) verflochtene Glasfasern umfasst.

5. Platte nach Anspruch 1, **dadurch gekennzeichnet, dass** sie ferner eine zweite wabenförmige Platte aus lichtdurchlässigem Kunststoffmaterial (11), die der Schicht aus anorganischem Material (3) zugewandt ist, und Befestigungsmittel zum festen Arretieren der ersten und der zweiten Platte aus Kunststoffmaterial (2, 11) zueinander umfasst; wobei die Schicht aus lichtdurchlässigem anorganischem Material (3) und das Harz (6) beide zwischen die erste und die zweite Platte aus Kunststoffmaterial (2, 11) gequetscht sind.

6. Platte nach Anspruch 1, **dadurch gekennzeichnet, dass** sie ferner eine zweite wabenförmige Platte aus lichtdurchlässigem Kunststoffmaterial (11), die der homogenen Lage (A') zugewandt ist, Befestigungsmittel zum festen Arretieren der ersten und der zweiten Platte aus Kunststoffmaterial (2, 11) zueinander und Abstandselemente (14) zum gegenseitigen Beabstanden der ersten und der zweiten Platte aus Kunststoffmaterial (2, 11) umfasst; wobei die erste und die zweite Platte aus Kunststoffmaterial (2, 11) einen Raum (15) zwischen sich begrenzen; und wobei die homogene Lage (A') diesen Raum (15) nur teilweise belegt.

7. Platte nach einem der vorhergehenden Ansprüche, **dadurch gekennzeichnet, dass** der Streifen aus intumeszierendem Material (2B; 2C) zwischen dem Umfangsabschnitt der homogenen Lage (A') und, im Einsatz, einem metallischen Strukturelement (H), das einen Halterahmen (S) der Platte (1; 10) definiert, oder zwischen dem Umfangsabschnitt der homogenen Lage (A') und einem Abstandselement (14) oder einem Strukturelement der Platte (1; 10) angeordnet ist.

8. Platte nach Anspruch 1, **dadurch gekennzeichnet, dass** der Streifen aus intumeszierendem Material (2B; 2C) mit dem Umfangsabschnitt der homogenen Lage (A') direkt in Kontakt ist.

9. Platte nach Anspruch 1, **dadurch gekennzeichnet, dass** sie ein Haftmaterial umfasst, das auf einer Oberfläche des Streifens (2B; 2C) gegenüber der Oberfläche, die der homogenen Lage (A') zugewandt ist, verteilt ist.

10. Platte nach einem der vorhergehenden Ansprüche, **dadurch gekennzeichnet, dass** die Schicht aus anorganischem Material (3) ein Gewicht im Bereich zwischen 10 und 100 g/m² hat.

11. Platte nach einem der vorhergehenden Ansprüche, **dadurch gekennzeichnet, dass** das Harz (6) ein Polymerbindemittel, einen anorganischen oder mineralischen Säurekatalysator, ein Kohlenstoffquellenmaterial und ein Expansionsmittel, das sich während einer Verbrennung durch Freigabe von nicht entflammbaren Gasen thermisch zersetzt, umfasst.

12. Verfahren zum Bilden einer verstärkten Dachabdeckungsplatte (1; 10) nach Anspruch 1; wobei das Verfahren die Schritte umfasst: Verwenden wenigstens einer ersten wabenförmigen Platte aus lichtdurchlässigem Kunststoffmaterial (2), durchgängiges Auftragen einer Lage aus intumeszierendem oder flammhemmendem Harz (6) auf einer Unterseite (5) der wabenförmigen Platte aus Kunststoffmaterial (2), durchgängiges Auflegen einer Schicht aus lichtdurchlässigem anorganischem Material (3) auf die Lage aus intumeszierendem oder flammhemmendem Harz (6) und festes Verbinden der Schicht aus anorganischem Material (3) durch Verfestigen oder Quervernetzen des intumeszierenden oder flammhemmenden Harzes (6), wodurch eine homogene Lage (A') gebildet wird, die eine Barriere zum Halten der geschmolzenen Teile der Platte (2) in dem Fall eines Feuers definiert;
**dadurch gekennzeichnet, dass** wenigstens ein Streifen aus intumeszierendem Material (2B; 2C) an einem Umfangsabschnitt der verstärkten Platte und auf einer Oberfläche der verstärkten Platte, die gegenüber einer Oberfläche der homogenen Lage (A') liegt, die der Unterseite (5) der ersten wabenförmigen Platte (2) zugewandt ist, angeordnet ist.

13. Verfahren nach Anspruch 12, **gekennzeichnet durch** Verwenden einer zweiten Platte aus lichtdurchlässigem Kunststoffmaterial (11), Anordnen der zweiten Platte aus Kunststoffmaterial (11) in Kontakt mit der homogenen Lage (A') und festes Arretieren der Platten aus Kunststoffmaterial (2, 11) zueinander.

14. Verfahren nach Anspruch 13, **dadurch gekennzeichnet, dass** die zweite Platte aus Kunststoffmaterial (11) in einer Position angeordnet ist, die von der ersten Platte (2) beabstandet ist, wodurch zwischen den Platten aus Kunststoffmaterial ein Raum (15) gebildet wird, der lediglich teilweise durch die homogene Lage (A') gefüllt wird, und dadurch, dass die Platten aus Kunststoffmaterial (2, 11) in der beabstandeten Position arretiert sind.

15. Dachabdeckung, die einen Halterahmen (S) und eine oder mehrere nebeneinander angeordnete verstärkte Platten (1, 10) umfasst, die auf dem Halterahmen (S) angeordnet sind, wobei die verstärkte Platte (1; 10) wie in Anspruch 1 beansprucht implementiert ist.

16. Dachabdeckung nach Anspruch 15, **dadurch gekennzeichnet, dass** jede der verstärkten Platten (1; 10) eine modulare Platte ist.

## Revendications

1. Panneau renforcé (1 ; 10) pour la formation d'une couverture de toit comprenant au moins une première plaque en forme de nid d'abeilles (2) d'une matière plastique translucide et des moyens de renforcement de ladite première plaque en forme de nid d'abeilles (2) orientés vers une surface inférieure (5) de ladite plaque (2), dans lequel lesdits moyens de renforcement comprennent une couche homogène translucide (A') ; dans lequel ladite couche homogène translucide (A') comprend une feuille de matière inorganique translucide (3) et une couche continue de résine expansive ignifuge ou intumescente (6) ; lorsque la plaque en forme de nid d'abeilles (2) en matière plastique atteint, ne serait-ce que localement, son point de ramollissement ou de fusion sous l'effet d'une combustion, ladite couche homogène (A') définit une barrière pour retenir les parties fondues de ladite plaque en forme de nid d'abeilles (2) en matière plastique ;
**caractérisé en ce qu'**au moins une bande de matière intumescente (2B ; 2C) est agencée au niveau d'une partie périphérique dudit panneau renforcé et sur une surface dudit panneau renforcé qui est à l'opposé d'une surface de ladite couche homogène (A') orientée vers la surface inférieure (5) de ladite première plaque en forme de nid d'abeilles (2).

2. Panneau selon la revendication 1, **caractérisé en ce que** ladite résine (6) est interposée entre ladite surface inférieure (5) et ladite feuille de matière inorganique (3) et incorpore au moins partiellement ladite feuille de matière inorganique (3).

3. Panneau selon la revendication 1, **caractérisé en ce que** ladite résine (6) est en contact avec ladite surface inférieure (5).

4. Panneau selon la revendication 1, **caractérisé en ce que** ladite feuille de matière inorganique (3) comprend des fibres de verre entrelacées.

5. Panneau selon la revendication 1, **caractérisé en ce qu'**il comprend en outre une seconde plaque en forme de nid d'abeilles de matière plastique translucide (11) orientée vers ladite feuille de matière inorganique (3), et des moyens de fixation pour bloquer fermement lesdites première et seconde plaques de matière plastique (2, 11) l'une avec l'autre ; ladite feuille de matière inorganique translucide (3) et ladite résine (6) étant toutes deux serrées entre lesdites première et seconde plaques de matière plastique (2, 11).

6. Panneau selon la revendication 1, **caractérisé en ce qu'**il comprend en outre une seconde plaque en forme de nid d'abeilles de matière plastique translucide (11) orientée vers ladite couche homogène (A'), des moyens de fixation pour bloquer fermement lesdites première et seconde plaques de matière plastique (2, 11) l'une avec l'autre et des éléments d'espacement (14) pour espacer mutuellement lesdites première et seconde plaques de matière plastique (2, 11) ; dans lequel lesdites première et seconde plaques de matière plastique (2, 11) délimitent un compartiment (15) entre celles-ci ; et dans lequel ladite couche homogène (A') n'occupe que partiellement ledit compartiment (15).

7. Panneau selon l'une quelconque des revendications précédentes, **caractérisé en ce que** ladite bande de matière intumescente (2B ; 2C) est agencée entre ladite partie périphérique de ladite couche homogène (A') et, lors de l'utilisation, un élément structural métallique (H) définissant un bâti de support (S) dudit panneau (1 ; 10) ou entre ladite partie périphérique de ladite couche homogène (A') et un élément d'espacement (14) ou un élément structural dudit panneau (1 ; 10).

8. Panneau selon la revendication 1, **caractérisé en ce que** ladite bande de matériau intumescent (2B ; 2C) est directement en contact avec ladite partie périphérique de ladite couche homogène (A').

9. Panneau selon la revendication 1, **caractérisé en ce qu'**il comprend une matière adhésive étalée sur une surface de ladite bande (2B ; 2C) opposée à celle qui est orientée vers ladite couche homogène (A').

10. Panneau selon l'une quelconque des revendications précédentes, **caractérisé en ce que** ladite feuille de matière inorganique (3) a un poids allant de 10 à 100 g/m².

11. Panneau selon l'une quelconque des revendications précédentes, **caractérisé en ce que** ladite résine (6) comprend un liant polymère, un catalyseur acide inorganique ou minéral, une matière de source carbonée et un agent expansif qui se décompose sous l'effet de la chaleur pendant la combustion en libérant des gaz non inflammables.

12. Procédé de formation d'un panneau de couverture de toit renforcé (1 ; 10) tel que défini dans la revendication 1 ; dans lequel le procédé comprend les étapes de l'utilisation d'au moins une première plaque de matière translucide en forme de nid d'abeilles (2), la distribution continue d'une couche de résine intumescente ou ignifuge (6) sur une surface inférieure (5) de ladite plaque de matière plastique en forme de nid d'abeilles (2), la pose continue d'une feuille de matière inorganique translucide (3) sur ladite couche de résine intumescente ou ignifuge (6) et la liaison ferme de ladite feuille de matière inorganique (3) par consolidation ou réticulation de ladite résine intumescente ou ignifuge (6), de sorte à former une couche homogène (A') qui définit une barrière pour retenir les parties fondues de ladite plaque (2) en cas d'incendie ;
**caractérisé en ce qu'**au moins une bande de matière intumescente (2B ; 2C) est agencée au niveau d'une partie périphérique dudit panneau renforcé et sur une surface dudit panneau renforcé qui est à l'opposé d'une surface de ladite couche homogène (A') orientée vers la surface inférieure (5) de ladite première plaque en forme de nid d'abeilles (2).

13. Procédé selon la revendication 12, **caractérisé par** l'utilisation d'une seconde plaque de matière plastique translucide (11), l'agencement de la seconde plaque de matière plastique (11) en contact avec ladite couche homogène (A') et le blocage ferme des plaques de matière plastique (2, 11) l'une avec l'autre.

14. Procédé selon la revendication 13, **caractérisé en ce que** ladite seconde plaque de matière plastique (11) est agencée dans une position espacée de ladite première plaque (2), de sorte à former entre les plaques de matière plastique un compartiment (15) qui n'est que partiellement rempli de ladite couche homogène (A'), et **en ce que** lesdites plaques de matière plastique (2, 11) sont bloquées dans ladite position espacée.

15. Couverture de toit comprenant un bâti de support (S) et un ou plusieurs panneaux renforcés juxtaposés (1 ; 10) agencés sur ledit bâti de support (S), ledit panneau renforcé (1 ; 10) étant mis en œuvre comme revendiqué dans la revendication 1.

16. Couverture de toit selon la revendication 15, **caractérisée en ce que** chacun desdits panneaux renforcés (1 ; 10) est un panneau modulaire.
